# EUROPEAN PATENT SPECIFICATION

(11) **EP 0 433 166 B1**
(45) Date of publication and mention of the grant of the patent: **12.02.1997**
(21) Application number: 90403536.7
(22) Date of filing: 11.12.1990
(51) Int. Cl.: H04M 1/72

(54) **Cordless telephone**
Schnurloses Telefon
Téléphone sans fil

(30) Priority: 11.12.1989 JP 321117/89; 12.12.1989 JP 322025/89
(43) Date of publication of application: 19.06.1991
(73) Proprietor: SONY CORPORATION, Tokyo (JP)
(72) Inventor: Yamagata, Masato, Shinagawa-ku, Tokyo (JP); Tanaka, Yoshikazu, Shinagawa-ku, Tokyo (JP)
(74) Representative: Thévenet, Jean-Bruno

(56) References cited:
- EP-A- 0 137 943
- EP-A- 0 258 739
- EP-A- 0 282 087
- PATENT ABSTRACTS OF JAPAN vol. 10, no. 313 (E-448)24 October 1986 & JP-A-61123326
- PATENT ABSTRACTS OF JAPAN vol. 12, no. 357 (E-662)26 September 1988 & JP-A-63114327

## Description

### BACKGROUND OF THE INVENTION

### Field of the Invention

The present invention relates to a cordless telephone.

### Description of the Prior Art

In a cordless telephone of small power type available on the Japanese market, 87 communication channels are prepared and two control channels are prepared (channels are each duplex channels).

Accordingly, in the standby mode, a handset unit (remote station) intermittently receives and monitors a control channel of a predetermined frequency so that, upon telephone communication, the handset unit can perform telephone conversation through a communication channel specified by the control channel.

However, in Japan, a control channel is not prepared in a cordless telephone of small power type. Further, in the United States of America, 10 duplex channels from the first to tenth channels are prepared in the cordless telephone but no control channel is prepared in the cordless telephone.

In the cordless telephones having no control channels prepared, as described, for example, in U.S. Pat. No. 4,768,219, in the standby mode of a base unit (master station) whose power source is a commercially available power source, the first to tenth channels are sequentially received and monitored and the reception and monitoring are repeatedly performed and the base unit awaits the connection request from the handset unit.

In the standby mode, the handset unit also receives and monitors the communication channels of the first to tenth channels always to thereby check the connection request from the base unit. Accordingly, the handset unit utilizes a battery as its power source and the handset unit always repeats the scanning in the standby mode. Therefore, the power consumption of the battery in the handset is considerably large and the battery must be changed in a short period of time. If the handset unit utilizes a rechargeable battery, such rechargeable battery must be recharged repeatedly, which is very cumbersome for the user.

There is known from EP-A-0 282 087 a radio channel search procedure for systems based on a master station and a plurality of mobile units. Each mobile station is assigned a group of priority channels from the available radio channels. The priority channels are identified in both the master stations and the corresponding mobile stations, and serve to set a speech path formation request to a called unit in receive-ready mode. Here, the object is to reduce the receive search time by narrowing the search, and thereby to obtain savings in battery power.

In document EP-A-0 258 739 there is disclosed a cordless telephone in which the base unit and handset are each provided with a channel access RAM. During the standby mode, the RAM data are continually updated with busy/idle identification data for given channels, so that when the standby mode is released for a communication exchange, the appropriate channel to use can be found immediately.

In document EP-A-0 137 943 there is disclosed exchanging data between a central radio station and a network of remote stations using a number of specified communication channels. Each remote station is equipped with memory devices that store coded data relative to a number of possible channels that may be called to establish a communication with another station so as to minimise the wait time.

Finally, in document JP-A-63 114 327 there is disclosed a cordless telephone apparatus in which a battery power saving at the handset station is obtained by pre-storage of an idle channel to serve as a communication channel. The idle channel data are stored in respective memories of the fixed and handset stations.

### OBJECTS AND SUMMARY OF THE INVENTION

Accordingly, it is an object of the present invention to provide an improved cordless telephone which can eliminate the aforenoted shortcomings and disadvantages encountered with the prior art.

More specifically, it is an object of the present invention to provide a cordless telephone in which the power consumption of a handset unit can be reduced considerably.

It is another object of the present invention to provide a cordless telephone in which proper channels to be received and monitored are automatically registered in a master station and a remote station.

According to an aspect of the present invention, a cordless telephone having means for establishing, upon communication, a communication channel (EMCH) between a master station and a remote station by radio wave link, wherein said master station is connected to a telephone line network to establish a telephone communication between said remote station and a party to be called ; said remote station is settable into a mode for intermittently receiving signals from said master station on at least one predetermined channel in a standby mode ; said remote station is placed in a sleep mode when not set in said mode for intermittently receiving signals from said master station ; said master station informs said remote station of incoming calls via said predetermined channel when said intermittently received call arrives ; means are provided for exchanging vacant channel information between said master and remote stations when said master and remote stations are operative and during a predetermined time, outside the time occupied by a telephone communication ; and said cordless telephone comprising memory means for storing a channel which is a vacant channel for both of said master and remote stations as the said predetermined channel ; characterised in that it further comprises : means active at the termination of a telephone communication to cause the master station to send vacant channel data (EMCH) (step 812) to said remote station ; means in said remote station for comparing said vacant channel data transmitted from said remote station with the vacant channel data at the time of termination of said telephone communication, the result of the comparison being used to produce data (HBEM) transmitted to said master station and indicative of vacant channels ; and means at said remote station for registering the said data indicative of the channels as the channel data (CHDT) to be used.

### BRIEF DESCRIPTION OF THE DRAWINGS

Fig. 1 is a timing chart used to explain the way of how to suppress the power consumption of a battery of a handset unit of a cordless telephone having no control channels prepared;
Fig. 2 is a schematic block diagram showing an embodiment of a cordless telephone according to the present invention;
Fig. 3 is a schematic diagram showing a signal format of the present invention;
Fig. 4 is a schematic diagram showing a sequence of an outgoing call;
Fig. 5 is a schematic diagram showing a sequence of a termination of a telephone conversation;
Fig. 6 is a schematic diagram showing a sequence of an incoming call;
Fig. 7 (formed of Figs. 7A and 7B drawn on two sheets of drawings to permit the use of a suitably large scale) is a flowchart to which references will be made in explaining an operation of a handset unit when the handset unit is actuated from the reset condition;
Fig. 8 is a flowchart to which references will be made in explaining an operation of a base unit when the base unit is operated in the normal condition;
Fig. 9 is a schematic diagram of a protocol used in a communication between the handset unit and the base unit;
Fig. 10 is a flowchart to which references will be made in explaining an operation of the handset unit when the handset unit is operated in the normal condition;
Fig. 11 is a flowchart to which references will be made in explaining an operation of the base unit when the base unit is actuated from the reset condition;
Fig. 12 is a diagram showing a relationship between channel numbers and frequencies of the transmission and reception frequencies of handset unit and base unit;
Fig. 13 is a schematic diagram of a protocol used in a communication between the handset unit and the base unit;
Fig. 14 (formed of Figs. 14A and 14B drawn on two sheets of drawings to permit the use of a suitably large scale) is a flowchart to which references will be made in explaining the operation of the handset unit;
Fig. 15 is a flowchart to which references will be made in explaining the operation of the base unit; and
Fig. 16 is a schematic diagram of a protocol when the channel data are updated normally.

### DETAILED DESCRIPTION OF THE PREFERRED EMBODIMENTS

The present invention will now be described with reference to the drawings.

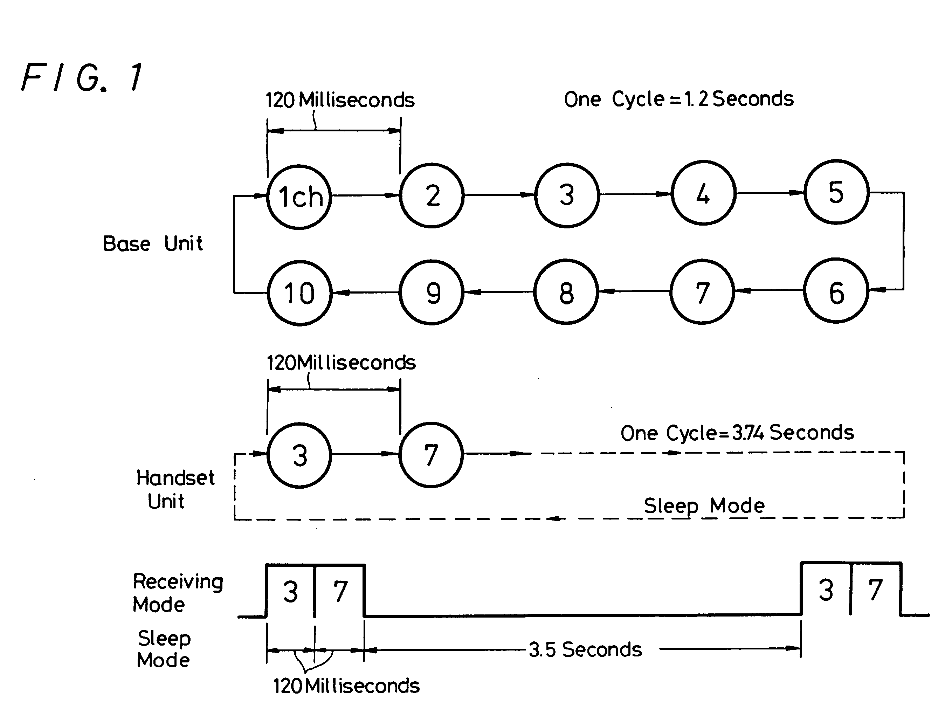

In the cordless telephone in which no control channels are prepared, a consumption of a battery of a handset unit is suppressed by a method of Fig. 1. In this embodiment, the present invention is applied to a cordless telephone available on the U.S. market.

A base unit is operated by a commercially available AC power so that, in the standby mode, the first to tenth channels are sequentially received and monitored and that this reception and monitoring are repeatedly performed to await the connection request from the handset unit. At that time, a time necessary for detecting the connection request from the handset unit is 120 milliseconds per, for example, one channel. Accordingly, all the channels are repeatedly scanned at a cycle of 1.2 seconds.

In the standby mode, the handset unit receives and monitors, for example, the third channel and then receives and monitors the seventh channel to thereby check whether or not the connection request from the base unit exists. If there is no such connection request, then the handset unit enters a sleep mode of, for example, about 3.5 seconds. The operation of this cycle is repeatedly performed by the handset unit.

Accordingly, the handset unit is placed in the sleep mode during most of the period where it is in the standby mode. Therefore, the consumption of the battery can be suppressed.

Then, the arrangement and operation of such cordless telephone will be described more fully hereinafter. In this embodiment, the channels that the handset unit receives and monitors are the third and seventh channels.

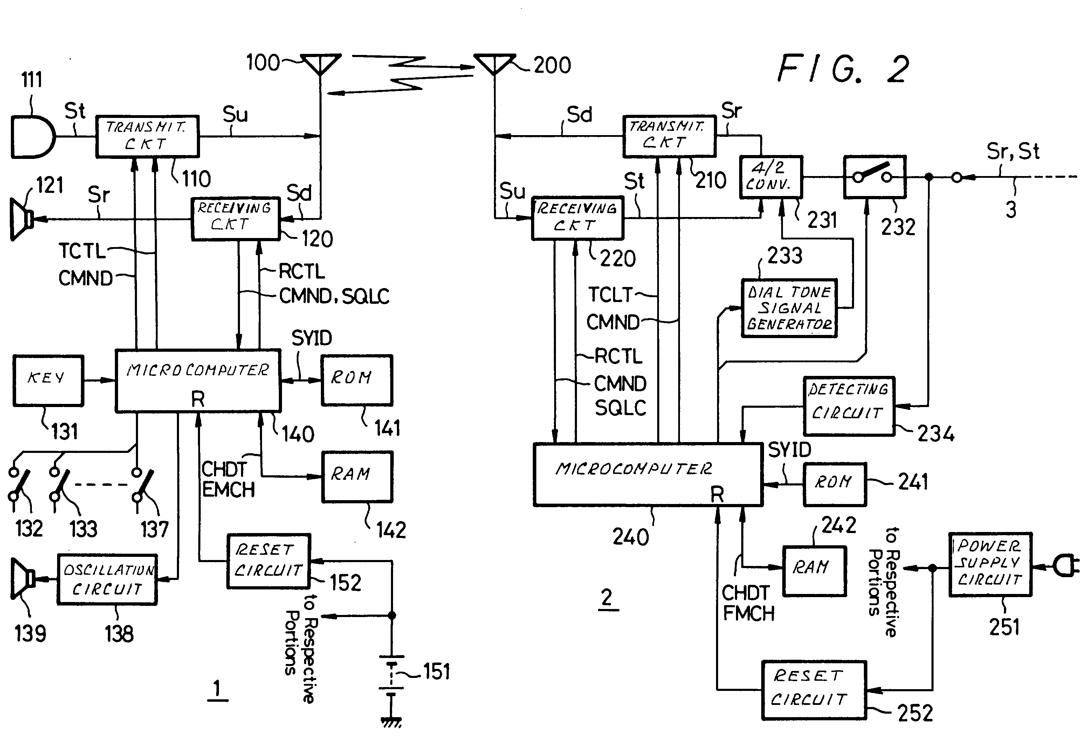

In Fig. 2, reference numeral 1 generally designates a handset unit, 2 a base unit and 3 a telephone network line (external line).

In the handset unit 1, reference numeral 110 designates a transmitting circuit and 120 a receiving circuit. The transmitting circuit 110 converts a sound signal St and a command signal CMND (described more fully later) into an FM (frequency modulated) signal Su of an up-channel and transmits the same. The receiving circuit 120 receives and demodulates an FM signal Sd of a down-channel to provide a sound signal Sr and the command signal CMND. Further, the receiving circuit 120 generates by detecting, for example, an intermediate frequency signal, a detection signal SQLC which goes "0" (low level) when receiving the FM signal Sd of down-channel. Incidentally, when the detection signal SQLC is at "1" (high level), it is determined that the channel in question is vacant.

In the handset unit 1, reference numeral 131 designates a dial key, and 132 a talk key. The talk key 132 is a non-lock type push switch and each time the talk key 132 is depressed, the handset unit 1 is alternately changed in mode between the standby mode and the talk mode. In the standby mode, the handset unit 1 is set in the standby mode for an outgoing call from the handset unit 1 itself, and the handset unit 1 intermittently receives two channels in the down channel, in that case, the third channel and the seventh channel and awaits the connection request from the base unit 2. In the talk mode, the handset unit 1 performs continuous reception and transmission between it and the base unit 2.

Reference numerals 133 to 137 designate auxiliary keys such as re-dialling key, hold key and so on formed of non-lock push switches. Reference numeral 139 designates a speaker for a ringer and 140 a microcomputer which controls the entire system of the cordless telephone. By way of example, the microcomputer 140 might be a one-chip microcomputer µPD75108 manufactured by NEC Corporation. The microcomputer 140 generates the command signal CMND which is transmitted by the transmitting circuit 110, and identifies the command signal CMND and the detection signal SQLC obtained from the receiving circuit 120. Further, the microcomputer 140 generates control signals TCTL and RCTL that are used to permit and/or inhibit the transmission and reception of the transmitting circuit 110 and the receiving circuit 120 and to designate the channel.

Reference numerals 141 and 142 designate memories, and the memory 141 is a read only memory (ROM) and this ROM 141 stores therein a system identifying code SYID of 25 bits that are used to identify this cordless telephone from other cordless telephones. The memory 142 is a random access memory (RAM), and this RAM 142 stores therein channel data CHDT that indicates a channel received by the handset unit 1, for example, the third and seventh channels in the standby mode.

Reference numeral 151 designates a battery for power supply source, and this battery 151 is a rechargeable battery such as a nickel-cadmium battery. An output voltage from this battery 151 is supplied to respective portions of the handset unit 1 as operative voltages. Further, reference numeral 152 designates an initial reset circuit.

The base unit 2 includes a transmitting circuit 210 and a receiving circuit 220 which are substantially the same as the transmitting circuit 110 and the receiving circuit 120 of the handset unit 1. In the standby mode, the receiving circuit 220 awaits the incoming call from the telephone network line 3 and also is scanning all up-channels to receive a connection request from the handset unit 1. In the talk mode, the base unit 2 performs continuous reception and transmission between it and the handset unit 1.

Further, in the base unit 2, reference numeral 231 designates a four line to two line converting circuit, 232 a switch circuit that corresponds to a hook switch of a standard telephone set, 233 a dial tone signal (DTFM signal) generating circuit, and 234 a ring tone signal detecting circuit.

Reference numeral 240 designates a system control microcomputer, and this microcomputer 240 performs similar processings to those of the microcomputer 140 and also controls the operation of the entire system of this cordless telephone. Similarly to the microcomputer 140, this microcomputer 240 might be a one-chip microcomputer µPD75108 manufactured by NEC Corporation. Reference numerals 241 and 242 designate memories which correspond to the memories 141 and 142. The ROM 241 stores therein the system identifying code SYID and the RAM 242 stores therein the data CHDT of channel that the handset unit 1 receives and monitors.

Further, reference numeral 251 designates a power supply source circuit, and this power supply source circuit 251 converts a commercially available AC voltage into a predetermined DC voltage and supplies the predetermined DC voltage to respective portions of the base unit 2 as operating voltages. Further, reference numeral 252 designates an initial reset circuit.

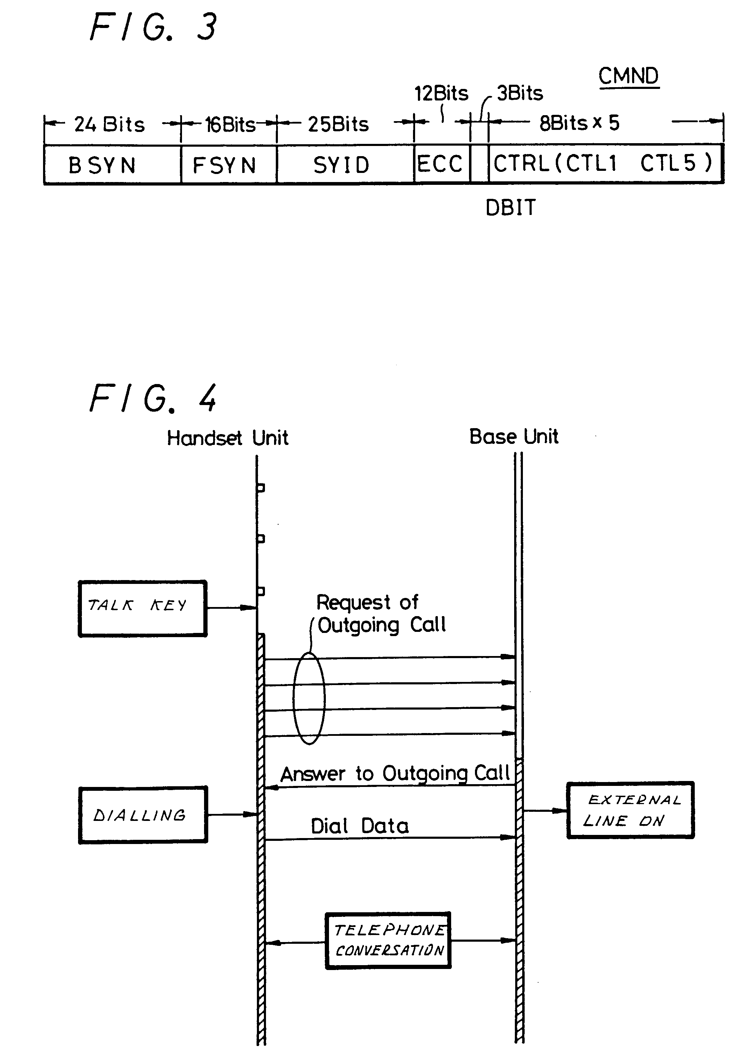

Fig. 3 shows an example of a signal format of the command signal CMND. This command signal CMND is formed of a bit synchronizing (sync.) signal BSYN of 24 bits at the head thereof and a frame synchronizing (sync.) signal FSYN of 16 bits. In that case, the bit synchronizing signal BSYN and the frame synchronizing signal FSYN have specific bit patterns expressed as
BSYN = "10101010 ..........10"
FSYN = "1100010011010110" ... up-channel
FSYN = "1001001100110110" ... down-channel

Furthermore, the command signal CMND is composed of, after the signal DSYN, a system identifying code SYID of 25 bits, an error correction code ECC of 12 bits for this system identifying code SYID, a dummy bit DBIT of 3 bits and a control code CTRL of 5 bytes, in that order.

In that case, in the control code CTRL of 5 bytes, its first byte CTL1 is a code indicative of the control contents of the handset unit 1 and the base unit 2, and second byte CTL2 to fifth byte CTL5 are parameters or data associated with the first byte CTL1 and so on.

When the handset unit 1 or the base unit 2 receives the command signal CMND, it is determined by the microcomputer 140 or 240 whether or not the identifying code SYID involved in the command signal CMND coincides with the identifying code SYID stored in the ROM 141 or 241. Only when they are coincident with each other, that command signal CMND is regarded as being valid, while when they are not coincident with each other, such command signal CMND is regarded as being invalid.

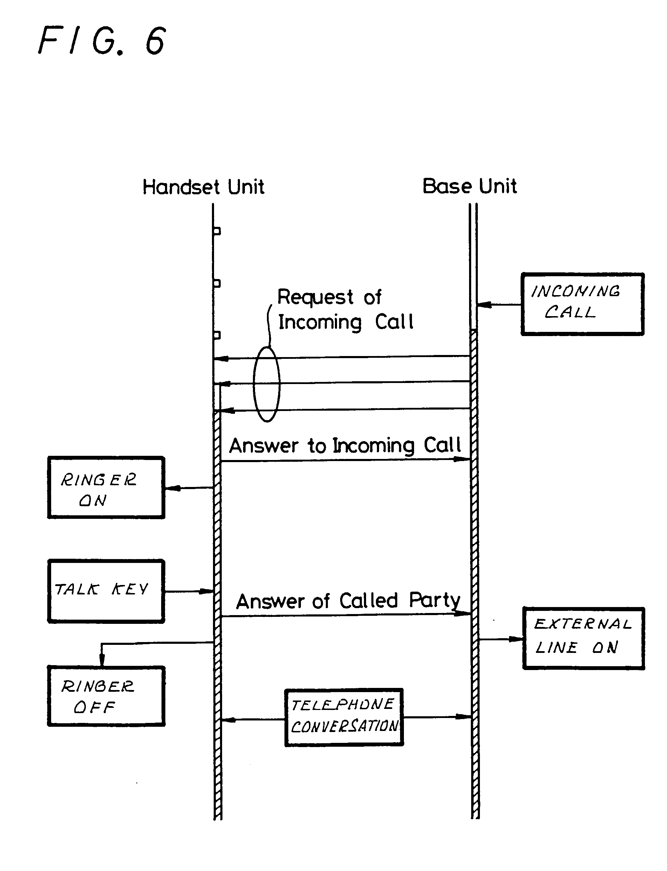

In the standby mode, the operations shown in Fig. 1 or operations shown in the upper portions of Figs. 4 and 6 are carried out.

More specifically, in Figs. 4 to 6, the solid lines in the vertical direction represent the conditions of the handset unit 1 and the base unit 2. Although the solid lines in the vertical direction represent the time axis direction, the time axis direction is not presented linearly for simplicity. The single solid line represents the sleep mode and the double solid line represents the mode that only the reception is permitted and the hatched portion represents a period in which the transmission also is permitted.

The handset unit 1 alternately and intermittently receives and monitors the down third and seventh channels in accordance with the channel data CHDT stored in the RAM 142, while the base unit 2 repeatedly scans all up-channels.

An outgoing call from the handset unit 1 to the external line is performed as in the connection sequence shown in Fig. 4.

More specifically, when the handset unit 1 is set in the standby mode, if the talk key 132 is depressed, such depression of the talk key 132 is detected by the microcomputer 140, whereby the receiving circuit 120 performs the reception on the down third channel or the down seventh channel indicated by the channel data CHDT stored in the RAM 142. If one of the above-mentioned channels, for example, the third channel is vacant, the reception channel of the receiving circuit 120 is fixed to the down third channel and the continuous reception is permitted. Further, in the up third channel, the transmitting circuit 110 is permitted to perform the transmission through the up third channel so that the handset unit 1 is placed in the talk mode on the third channel.

Subsequently, the command signal CMND (indicating that the control code CTRL requests the outgoing call) is repeatedly supplied from the microcomputer 140 to the transmitting circuit 110, and the command signal CMND is converted to the FM signal Su of the up third channel by the transmitting circuit 110. This signal Su is transmitted to the base unit 2 via an antenna 100.

Then, in the base unit 2, although the signal (radio wave) Su is received by an antenna 200, the receiving circuit 220 repeatedly scans all up channels so that, when the reception channel becomes the third channel, the receiving circuit 220 derives the detection signal SQLC. Then, the scanning of the receiving circuit 220 is stopped at the third channel and then the receiving circuit 220 demodulates the FM signal Su to provide the command signal CMND. This command signal CMND is supplied to the microcomputer 240 which determines whether or not the identifying code SYID involved in the command signal CMND coincides with the identifying code SYID stored in the ROM 241.

In that case, since the identifying codes SYID are coincident with each other and the control code CTRL involved in the command signal CMND indicates the request of outgoing call, the transmitting circuit 210 is permitted by the microcomputer 240 to perform the transmission in the channel in which the FM signal Su is received, in that case, the down third channel. Accordingly, the base unit 2 also is placed in the talk mode through the third channel. Then, the command signal which answers the request of outgoing call is supplied from the microcomputer 240 to the transmitting circuit 210, and in the transmitting circuit 210, the command signal CMND is converted into the FM signal Sd of the down third channel, this signal Sd being transmitted to the handset unit 1 via the antenna 200.

When the FM signal Sd is transmitted from the base unit 2 to the handset unit 1 through the down third channel, this FM signal Sd is received by the antenna 100 and fed to the receiving circuit 120, whereby the command signal CMND is generated from the receiving circuit 120 and fed to the microcomputer 140.

Since the identifying code SYID involved in the command signal CMND is coincident with the identifying code SYID stored in the ROM 141 and the control code CTRL involved in the command signal CMND indicates the answer to the request of outgoing call, the transmitting circuit 110 and the receiving circuit 120 are definitely set in the talk mode in the third channel.

Accordingly, a communication channel between the handset unit 1 and the base unit 2 are connected via the third channel.

Further, in the base unit 2, the switch circuit 232 is placed in the off hook mode, whereby the transmitting circuit 210 and the receiving circuit 220 are connected to the telephone network line 3 via the converting circuit 231 and the switch circuit 232.

Therefore, the handset unit 1 is connected to the telephone network line 3 via the base unit 2.

Then, if the user inputs a telephone number of the party to be called by using the dial key 131 of the handset unit 1, the command signal CMND whose control code CTRL indicates the transmission of the telephone number and the corresponding telephone number is generated, and this signal CMND is converted to the up channel FM signal Su and transmitted.

Accordingly, in the base unit 2, the receiving circuit 220 derives the command signal CMND, and the control code CTRL of this command signal indicates the transmission of the telephone number and the corresponding telephone number so that the generating circuit 233 is controlled by the microcomputer 240 in accordance with the telephone number to thereby generate a dial tone signal corresponding to the telephone number supplied thereto from the handset unit 1. This dial tone signal is transmitted through the converting circuit 231 and the switch circuit 232 to the telephone network line 3.

When the called phone is answered, the audio signal Sr from the party being called is supplied to the transmitting circuit 210 via a signal line formed of the telephone network line 3, the switch circuit 232 and the converting circuit 231, in that order. Therefore, this audio signal Sr is converted into the FM signal Sd of down channel and this signal Sd is transmitted from the antenna 200.

Then, this signal Sd is received by the handset unit 1 and the receiving circuit 120 derives the audio signal Sr, this signal Sr being supplied to the telephone receiver 121.

In transmission, the audio signal St from the telephone transmitter 111 is supplied to the transmitting circuit 110, in which it is converted into the FM signal of the up channel, this signal Su being transmitted from the antenna 100 to the base unit 2.

This signal Su is received by the base unit 2 and the signal St is generated from the receiving circuit 220. This signal St is supplied to the telephone network line 3 via the converting circuit 231 and the switch circuit 232, and is then transmitted to the telephone set of the third party.

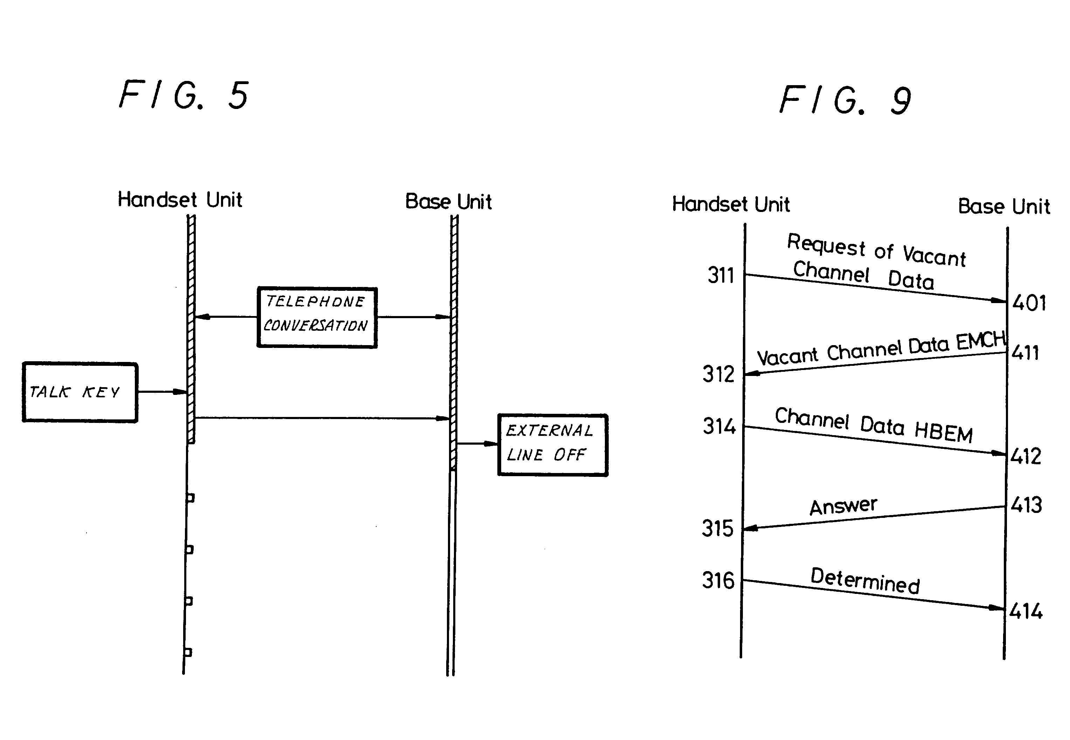

When the telephone communication is ended, as shown in Fig. 5, if the talk key 132 of the handset unit 1 is depressed, the command signal CMND whose control code CTRL indicates the termination of the telephone communication is generated and this command signal CMND is transmitted to the base unit 2 on the FM signal Su of up channel.

Then, the receiving circuit 220 of the base unit 2 derives that command signal CMND and the microcomputer 240 determines that the telephone communication is finished. As a result, the transmission of the transmitting circuit 210 is inhibited and the receiving circuit 220 is placed in the mode in which it repeatedly scans all up channels, that is, the standby mode. The switch circuit 232 also is placed in the on hook mode.

Further, also in the handset unit 1, after the command signal CMND whose control code CTRL indicates the end of the telephone communication has been transmitted, the transmission of the transmitting circuit 110 is inhibited and the receiving circuit 120 is placed in the mode where it alternately and intermittently receives the down third and seventh channels one more time, that is, the standby mode.

An incoming call to the handset unit 1 from the external line is received by the handset unit 1 as in a connection sequence shown, for example., in Fig. 6.

When an incoming call arrives through the telephone network line 3, the ring tone signal is detected by the detecting circuit 234 and the detection signal is supplied to the microcomputer 240 in the base unit 2. Thus, the receiving circuit 220 receives the up third channel or seventh channel indicated by channel data CHDT stored in the RAM 242. If either of the channels, for example, the third channel is vacant, the reception channel of the receiving circuit 220 is fixed to the up third channel. Further, in the down third channel, the transmission of the transmitting circuit 210 is permitted so that the base unit 2 is set in the talk mode in the third channel.

Subsequently, the command signal CMND (whose control code CTRL indicates the request of incoming call) is repeatedly supplied from the microcomputer 240 to the transmitting circuit 210, and the command signal CMND is converted into the FM signal Sd of down third channel and is then transmitted to the handset unit 1.

In the handset unit 1, the signal Sd is received by the antenna 100, and the receiving circuit 120 alternately and intermittently scans repeatedly the down third and seventh channels in accordance with the channel data CHDT stored in the RAM 142 so that, when the reception channel becomes the third channel, the receiving circuit 120 derives the detection signal SQLC. Then, in the third channel, the scanning operation of the receiving circuit 120 is stopped and the receiving circuit 120 demodulates the FM signal Sd to provide the command signal CMND, to thereby determine whether or not the identifying code SYID involved in this command signal CMND coincides with the identifying code SYID stored in the ROM 141.

In that case, since the identifying codes SYID are coincident with each other and the control code CTRL involved in the signal CMND indicates the request of the incoming call, the transmission of the transmitting circuit 110 is permitted in the channel in which the FM signal Su is received, in that case, the up third channel. Therefore, the handset unit 1 also is set in the talk mode in the third channel.

Subsequently, the command signal which answers the request of incoming call is supplied to the transmitting circuit 110 from the microcomputer 140, and this signal CMND is converted into the FM signal Su of the up third channel and is then transmitted to the base unit 2.

In the base unit 2, when the FM signal Su is transmitted thereto from the handset unit 1 via the up third channel, the command signal CMND is generated from the receiving circuit 220 and fed to the microcomputer 240.

Since the identifying code SYID involved in the command signal CMND is coincident with the identifying code SYID stored in the ROM 241 and the control code CTRL involved in the command signal CMND indicates the answer to the request of incoming call, the talk modes of the transmitting circuit 210 and the receiving circuit 220 in the third channel are determined.

Accordingly, a communication channel between the handset unit 1 and the base unit 2 is connected via the third channel.

Further, in the handset unit 1, the oscillation circuit 138 is controlled by the microcomputer 140 to generate a ringer signal, and this ringer signal is supplied to the speaker 139 so that the speaker 139 emanates a bell sound, announcing the arrival of the incoming call.

In the handset unit 1, if the talk key 132 thereof is depressed, a command signal CMND of answering whose control code CTRL indicates the depression of the talk key 132 is generated. This command signal CMND is transmitted via the FM signal Su and the oscillation circuit 138 is turned OFF, whereby the ringer is turned OFF.

When the command signal CMND from the handset unit 1 is received by the base unit 2, the switch circuit 232 is placed in the off hook state.

Accordingly, a communication channel is opened between the handset unit 1 and the base unit 2, thus the telephone communication to the handset unit 1 of called phone being effected from now on.

Incidentally, when the user buys the above-mentioned cordless telephone, channel data CHDT are not yet registered in the RAMs 142 and 242.

Further, even when the channel data CHDT is registered in the RAM 142, if the handset unit 1 is not placed in the standby mode inadvertently after, for example, the telephone conversation has been finished or if the battery 151 is not charged, the battery 151 is fully consumed so that the channel data CHDT stored in the RAM 142 is lost.

Further, it is frequently observed that, in the base unit 2, the channel data CHDT stored in the RAM 242 will be lost by the power failure. If the channel data CHDT is not registered in the handset unit 1 or in the base unit 2, the handset unit 1 and the base unit 2 cannot be utilized.

Furthermore, even if the operation voltage is supplied to the handset unit 1 and the base unit 2, and the handset unit 1 and the base unit 2 are made operable, in the standby mode, the handset unit 1 monitors only the two channels of, for example, the third channel and seventh channel. Thus, when an incoming call is arrived, the base unit 2 can effectively utilize only two channels of the 10 channels.

Consequently, when the incoming call is arrived, even if the third and seventh channels are utilized and other channels are all vacant, no vacant channel is provided so that the incoming call cannot be received. In other words, although the 10 channels are permitted, only two channels can be utilized effectively.

In order to solve the aforenoted problem, if in the standby mode the handset unit 1 and the base unit 2 are arranged to repeatedly scan all down channels, the duration of the sleep mode must be reduced, which consumes the battery 151 considerably in the standby mode.

Accordingly, in the handset unit 1 and the base unit 2, when the battery 151 of the handset unit 1 is consumed fully and the battery 151 must be exchanged or recharged so that the handset unit 1 is again set in the operable condition, when a power failure occurs in the power of the base unit 2 and then the power failure is restored so that the base unit 2 is again made operable, when the user purchases the cordless telephone and setsa new battery into the handset unit 1 or setsthe recharged battery in the handset unit 1 and then the base unit 2 is powered and in another condition that the handset unit 1 and the base unit 2 are actuated from the reset condition, such as when the telephone communication is ended after the handset unit 1 and the base unit 2 are powered by the supply of drive voltages and they are placed in the communication mode, that is, in predetermined operation modes other than the above-mentioned communication mode, latest channel data CHDT are registered in the handset unit and the base unit automatically.

An example of actuation operation from the reset condition will be explained specifically.

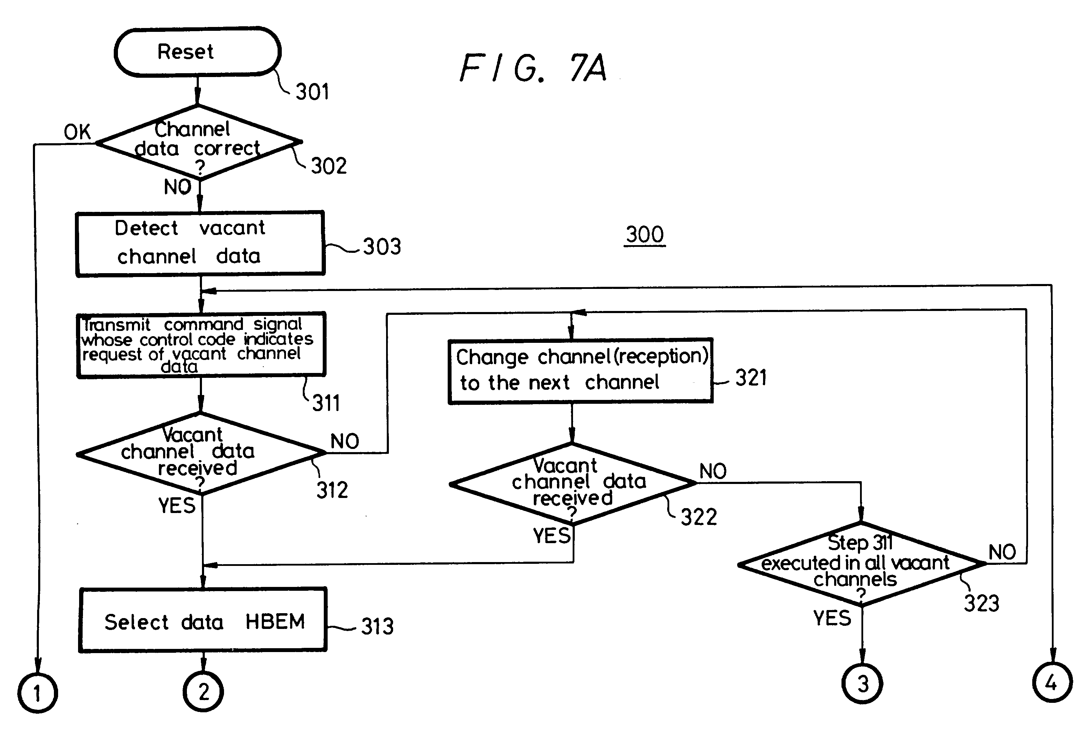

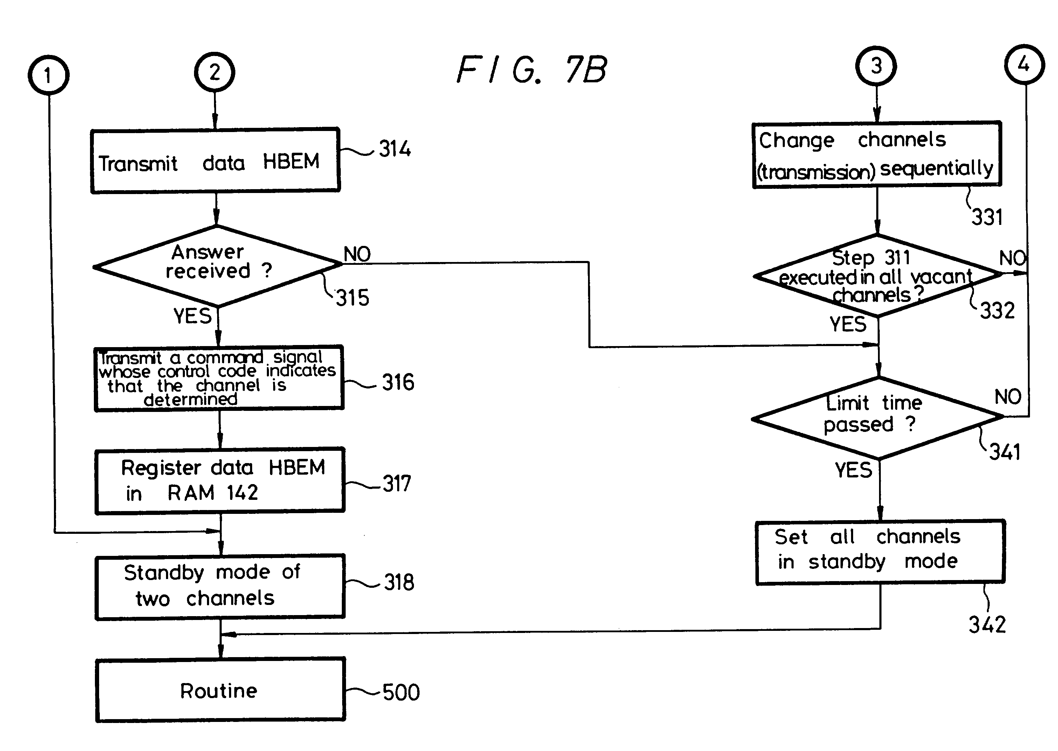

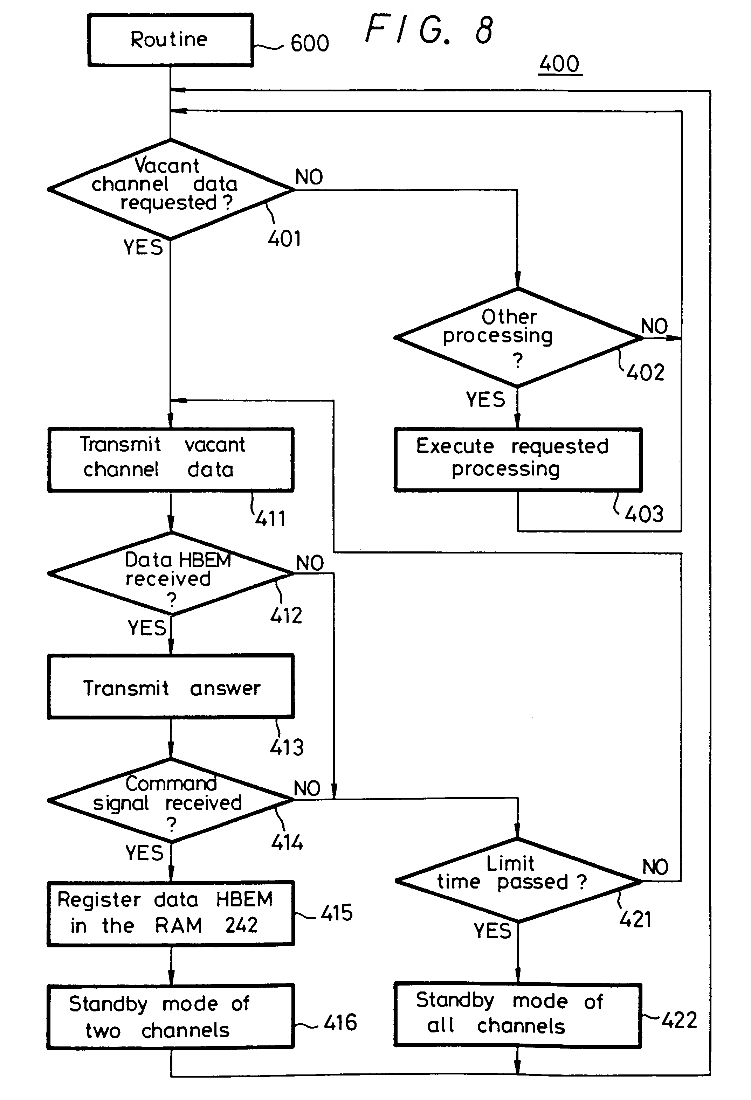

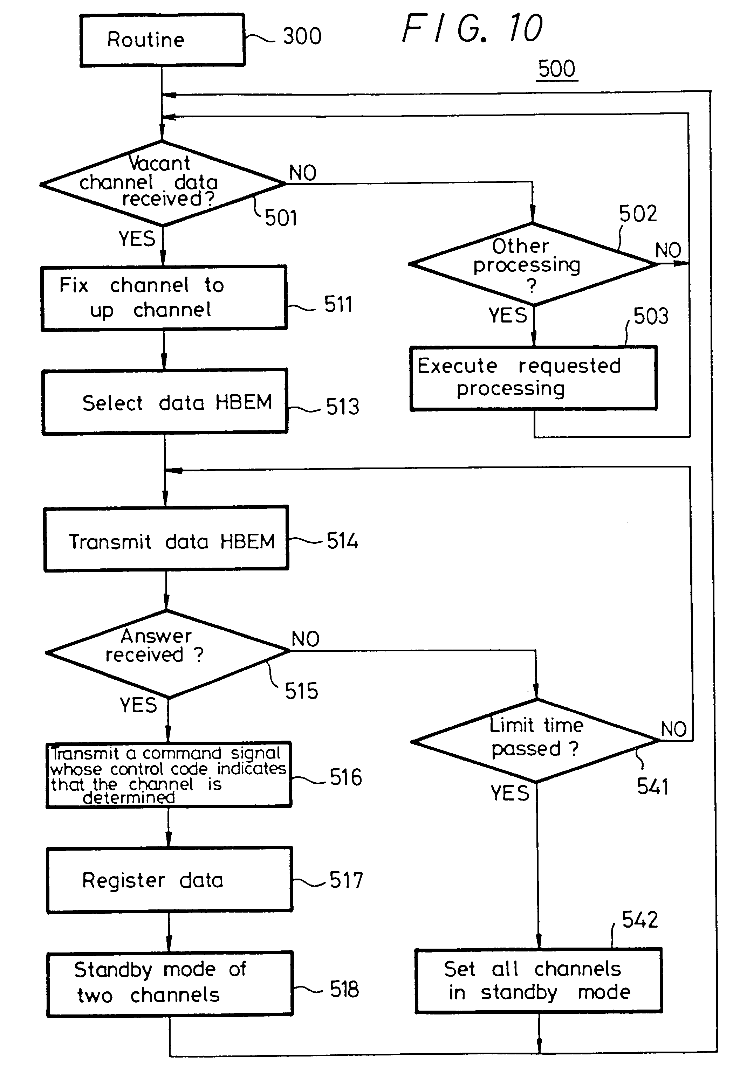

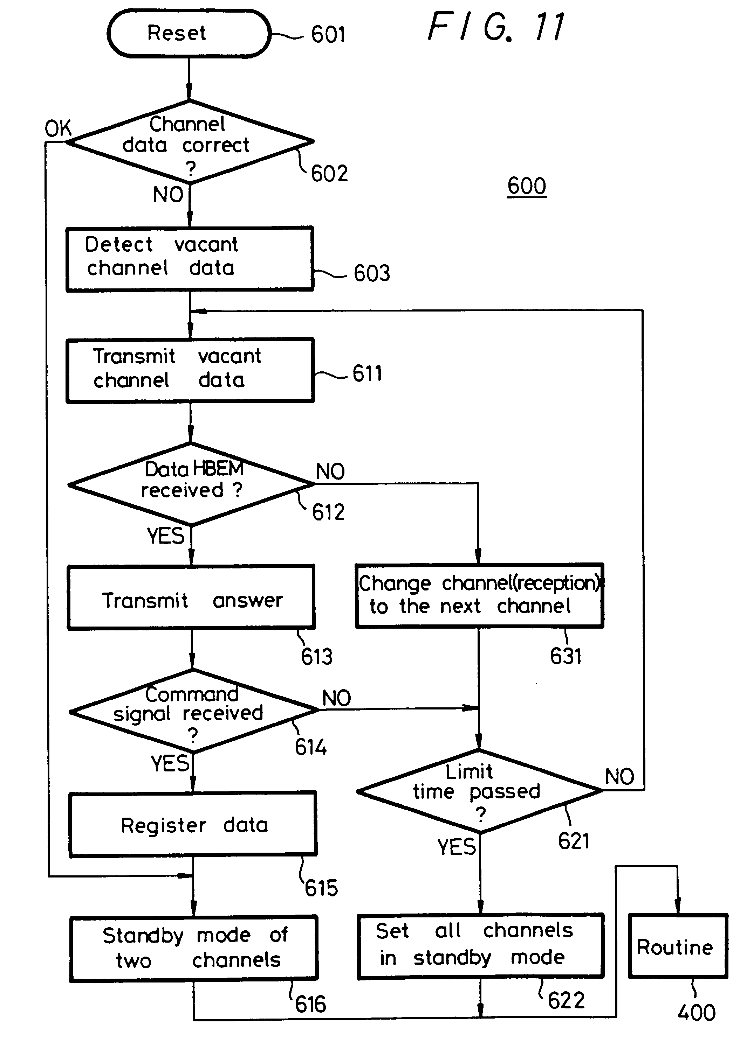

Routines 300 and 500 shown in the flowcharts of, for example, Figs. 7 and 10 are prepared in the microcomputer 140, while routines 400 and 600 shown in the flowcharts of, for example, Figs. 8 and 11 are prepared in the microcomputer 240.

In addition to the registered address of communication channel data CHDT, addresses for storing vacant channel data EMCH are prepared in the RAMs 142 and 242.

If now the handset unit 1 and the base unit 2 are supplied with predetermined voltages from predetermined power sources thereof so that the handset unit 1 and the base unit 2 are set in the correct operable condition, in the standby mode, all up channels are repeatedly scanned, received and then monitored in the base unit 2. At that time, if the vacant channel exists, all vacant channels are registered in the RAM 242 as the vacant channel data EMCH. The vacant channel data EMCH of the RAM 242 are always updated each time the channel is scanned.

An operation in which the handset unit 1 is made operable from the reset state and the base unit 2 is operated correctly will be described. In other words, this is the case such that the battery 151 of the handset unit 1 is exchanged (recharged) after the battery 151 has been consumed fully.

In that case, in the handset unit 1, the routine 300 is executed and in the base unit 2, the routine 400 is executed. Fig. 9 shows a protocol in which every operations are carried out correctly, and reference numerals on two sides of the protocol of Fig. 9 identify reference numerals of respective steps in the routines 300 and 400.

When the battery 151 is exchanged, this exchange is detected by the reset circuit 152 and a reset pulse is supplied therefrom to the microcomputer 140, whereby the processing of the microcomputer 140 begins with step 301 of the routine 300. In the next decision step 302, it is determined whether or not the channel data CHDT stored in the RAM 142 is correct. This checking operation is carried out by checking, for example, a check bit which is added beforehand to the channel data CHDT. If the checked result is abnormal as represented by an NO in step 302, or if the channel data CHDT is lost, the routine proceeds from step 302 to step 303. In step 303, all down channels are sequentially received and monitored to thereby detect vacant channels. Then, all vacant channels detected are registered in the RAM 142 as the vacant channel data EMCH. In the next step 311, one channel of the vacant channels detected in step 303 is utilized to transmit a command signal CMND whose control code CTRL indicates the request of the vacant channel data EMCH. In that case, this transmission of the command signal CMND is repeatedly carried out during a period little longer than a period in which one cycle of the scanning of the base unit 2 in the reception and monitoring is finished, that is, 1.24 seconds.

Then, the processing of the microcomputer 140 proceeds from step 311 to the next decision step 312.

On the other hand, since the base unit 2 is set in the normal standby mode, predetermined steps of the routine 400 are repeated.

More specifically, as shown in Fig. 8, it is determined in step 401 by the microcomputer 240 whether or not the handset unit 1 requests the vacant channel data EMCH at step 311. If the handset unit 1 does not yet request the vacant channel data EMCH as represented by a NO at step 401, then the processing proceeds to the next decision step 402. In step 402, it is determined whether or not other processing is requested. If not, the processing returns from step 402 to step 401. If on the other hand, other processing is requested as represented by a YES at step 402, the processing proceeds from step 402 to step 403, and at step 403, the requested processing is executed. Thereafter, the processing returns to step 401.

Accordingly, in the normal condition, steps 401, 402 (and step 403) are repeated in the base unit 2, that is, the base unit 2 is placed in the standby mode.

However, if the command signal CMND which requests the vacant channel data EMCH is transmitted at step 311, then the duration of this transmission is longer than one cycle of the scanning of the base unit 2 in the reception and the monitoring so that this transmission is detected in step 401. Then, the processing proceeds from step 401 to step 411. In step 411, the channel is fixed to the up channel in which the command signal CMND is received and the down channel which forms a pair of the up channel, and a command signal CMND whose control code CTRL indicates the transmission of the vacant channel data EMCH and the vacant channel data EMCH stored in the RAM 242 is generated. This signal CMND is transmitted to the handset unit 1 and the processing proceeds to step 412.

Since the channel is not changed in the handset unit 1, the command signal CMND of the step 411 is detected at step 312, and the processing proceeds from step 312 to step 313. In step 313, the vacant channel data EMCH obtained at step 303 and the vacant channel data EMCH transmitted from step 411 are compared with each other to generate data HBEM which indicates vacant channels in both of data EMCH and EMCH.

In that case, as will be referred to later, of the channels indicated by the data HBEM, two channels are registered in the RAMs 142 and 242 as channel data CHDT. When data HBEM of two channels are not obtained, the channel which becomes the vacant channel in the base unit 2 is employed as the data HBEM. If that channel is not obtained, the present channel and the channel next to the present channel are employed as the data HBEM.

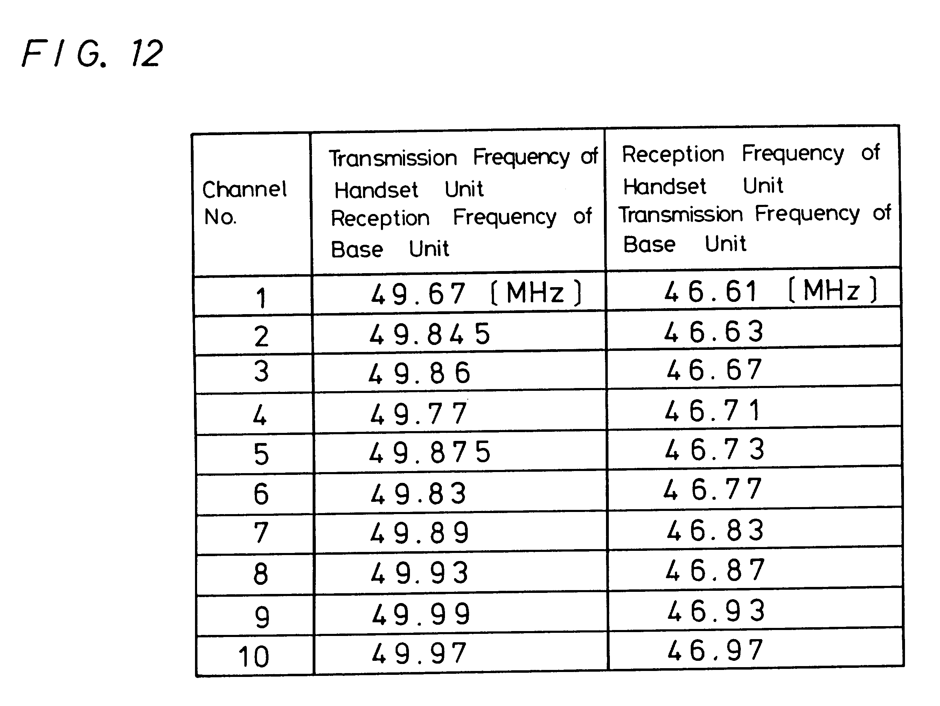

However, a relationship between the channel number and the frequency of the cordless telephone in the United States of America is represented in Fig. 12. A frequency interval is not regular so that, when the combination of the channels falls in any one of the following combinations, that is, second and third channels, second and sixth channels, third and fifth channels and fifth and seventh channels, there is then a large possibility that when any one of channels is disturbed by the other cordless telephone, i.e. radio interference or the like occurs, the other channel will be disturbed simultaneously. For example, when the second channel is disturbed, the third channel tends to be disturbed simultaneously (when the intermediate frequency is 10.695 MHz).

For this reason, the above combinations of the channels are excluded from the data HBEM.

In the next step 314, the command signal CMND whose control code CTRL indicates the transmission of the channel data HBCM and the data HBEM obtained at step 313 is generated. This signal CMND is transmitted to the base unit 2, and the processing proceeds to decision step 315.

Then, this command signal CMND is detected at step 412 and the processing proceeds to the next step 413. In step 413, a command signal CMND whose control code CTRL is indicative of the answer of the reception of the data HBEM is transmitted to the handset unit 1 and the processing proceeds to step 414.

If the control code CTRL is detected at decision step 315, then the processing proceeds from step 315 to step 316. In step 316, a command signal CMND whose control code CTRL indicating that the channel is determined is transmitted to the base unit 2, and the processing proceeds to step 317. In step 317, the data HBEM is registered in the RAM 142 as the channel data CHDT.

Subsequently, in step 318, as explained with reference to Fig. 1 or the like, the standby mode in which two channels indicated by the channel data CHDT are alternately and intermittently received and monitored is set. In the standby mode, when the handset unit 1 is connected to the base unit 2 in order to call the other party or the like, the setting of the standby mode is performed so that the outgoing call is made by an arbitrary vacant channel. In the following processing, the base unit 2 enters the standby mode in which mode the two channels are intermittently received.

Further, in the base unit 2, the command signal CTRL transmitted at step 316 is detected at step 414, and the processing proceeds from step 414 to step 415. In step 415, the data HBEM is registered in the RAM 242 as the channel data CHDT.

In the next step 416, as explained with reference to Fig. 1 or the like, the standby mode in which all channels are repeatedly scanned, received and monitored is set. In this standby mode, when the base unit 2 is connected to the handset unit 1 in order to make an incoming call, the setting of the standby mode is set so that the telephone conversation is made via the two channels indicated by the channel data CHDT. Then, the processing returns to step 401 and the base unit 2 is placed in the standby mode from now on.

Accordingly, the handset unit 1 and the base unit 2 enter the standby mode together.

On the other hand, if in step 311 the handset unit 1 transmits the command signal CMND whose control code CTRL requests the vacant channel data EMCH, it is frequently observed that, while the channel used to transmit the command signal CMND is vacant in the handset unit 1, such channel in the base unit 2 is occupied by other cordless telephone.

In that case, in the base unit 2, the transmission of the command signal CMND in step 411 is not performed so that the handset unit 1 cannot receive that command signal CMND. Consequently, the processing proceeds from step 312 to step 321.

Step 321 and the following steps 322 and 323 become useful when the handset unit 1 and the base unit 2 are both started to operate from the reset conditions. These steps 321, 322 and 323 are useless when only the handset unit 1 is started to operate from the reset condition, as will be described more fully later. This time, the processing proceeds from step 321 to step 331 through steps 322 and 323.

In step 331, the channel of the handset unit 1 is changed to the next vacant channel on the basis of the vacant channel data EMCH stored in the RAM 142. In the next decision step 323, it is determined whether or not the step 311 is executed in all vacant channels indicated by the vacant channel data EMCH. If the step 311 is not yet executed in all vacant channels as represented by a NO at step 332, then the processing returns from step 332 to step 311.

Therefore, even when in step 311 the command signal CMND which requests the vacant channel data EMCH is transmitted, if the command signal CMND of the data EMCH is not returned in step 411, the loop formed of steps 311, 312, 321, 322, 323, 331, 332 and 311 in that order is repeated until the command signal CMND is returned. At that time, the channels are sequentially changed at step 331.

If the above-mentioned command signal CMND of step 411 is returned in a certain channel, this command signal CMND is detected in step 312, and the processing proceeds from step 312 to step 313. The aforenoted processings are executed from now on.

If the step 311 is executed in all vacant channels indicated by the vacant channel data EMCH stored in the RAM 142, the processing proceeds from step 332 to decision step 341. It is determined in step 341 whether or not a predetermined limit time, for example, 25 seconds are passed since the step 311 has been executed for the first time. This limit time corresponds to twice the time necessary for sequentially receiving and monitoring from the first channel to the tenth channel one by one in steps 321 to 323, that is, 10 channels × 1.2 seconds × 2.

If the predetermined limit time is not passed as represented by a NO at step 341, then the processing returns from step 341 to step 311, and the step 311 and the following steps are executed from now on.

However, if the predetermined limit time is passed as represented by a YES at step 341, the processing proceeds from step 341 to step 342. In step 342, the setting of the standby mode in the handset unit 1 is performed so that all channels are scanned, received and monitored and that the handset unit 1 is set in the sleep mode of, for example, about 2.54 seconds each time the scanning is ended. In this standby mode, when the handset unit 1 is connected to the base unit 2 in order to call the other party, the setting is performed so that the telephone conversation is made via an arbitrary vacant channel. Then, the handset unit 1 enters the standby mode in which all channels are received intermittently.

Accordingly, in that case, the handset unit 1 receives and monitors all channels in the standby mode.

In that case, a cycle in which an arbitrary channel is received and monitored one more time after that channel has been received and monitored is equal to 3.74 seconds (= 120 milliseconds × 10 channels + 2.5 seconds). This period is equal to the period 3.74 seconds (120 milliseconds × 2 channels +3.5 seconds) of the inherent standby mode in which two channels are intermittently received and monitored. Accordingly, when an incoming signal is received, a time necessary for connecting the base unit 2 and the handset unit 1 is equal from an average standpoint but the duration of the sleep period is reduced from the original duration of 3.5 seconds to 2.54 seconds.

Further, if the command signal CMND returned by the base unit 2 in step 413 is not received as represented by a NO at step 315, then the processing returns to step 311 from step 315 through step 341 for safety. The processing at step 311 is again executed.

If it is determined in step 302 that the channel data CHDT stored in the RAM 142 is not abnormal when the channel data CHDT is checked, the processing proceeds from step 302 to step 318, wherein the handset unit 1 is placed in the original standby mode in which the two channels are intermittently received.

Further, if the command signal CMND whose control code CTRL indicates the vacant channel data EMCH is not received by the base unit 2 in step 412, then the processing proceeds from step 412 to decision step 421. In decision step 421, it is determined whether or not a predetermined limit time, for example, 41 seconds are passed since the step 421 has been executed for the first time. If the predetermined limit time is not passed as represented by a NO at step 421, then the processing returns from step 421 to step 411, and the step 411 and the following steps are executed.

If the predetermined limit time is passed as represented by a YES at step 421, then the processing proceeds from step 421 to step 422. In step 422, the setting of the standby mode for the base unit 2 wherein all channels are scanned, received and monitored is performed. In this standby mode, when the base unit 2 is connected to the handset unit 1 in order to make an incoming call or the like, this connection is carried out through a desired vacant channel. Then, the processing returns to step 401 from step 422 and the base unit 2 is set in the standby mode set in step 422.

Further, in step 414, when the command signal CMND in step 316 is not received, the processing returns to step 411 from step 414 through step 421 for safety, and step 411 and the following steps are again executed.

An operation in which the handset unit 1 is in the normal condition and the base unit 2 is actuated from the reset conditicn will be described below. This operation is performed when the power failure is restored after the power failure occurred in the power source of the base unit 2.

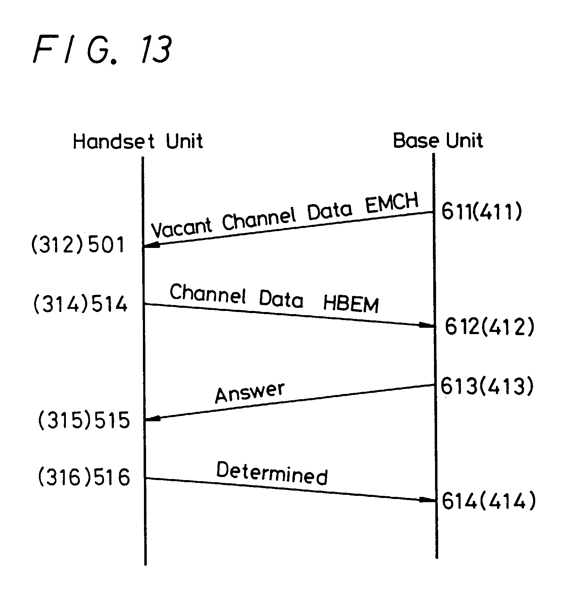

In that case, a routine 500 shown in Fig. 10 is executed in the handset unit 1 and a routine 600 shown in Fig. 11 is executed in the base unit 2. Fig. 13 shows a protocol when all the operations are carried out normally. Reference numerals in the two sides of Fig. 13 identify steps in the routines 500 and 600, and parenthesized reference numerals are those of corresponding steps in the routines 300 and 400.

More specifically, when the power failure is restored, this restoration is detected by the reset circuit 252, and a reset pulse is supplied to the microcomputer 240. Then, the processing of the microcomputer 240 begins with step 601 of the routine 600. In the next decision step 602, it is determined whether or not the channel data CHDT stored in the RAM 242 is normal.

If the checked result indicates that the channel data CHDT is abnormal as represented by an NO at step 602, or if the data CHDT is lost, then the processing proceeds from step 602 to step 603. In step 603, all up channels are sequentially received and monitored to thereby detect vacant channels, and all vacant channels detected are registered in the RAM 242 as vacant channel data EMCH. In the next step 611, similarly to step 411, a command signal CMND whose control code CTRL indicates the transmission of the vacant channel data and the vacant channel data EMCH is transmitted by utilizing one channel of the detected vacant channels. In that case, the transmission of the command signal CMND is repeatedly carried out during a period of time a little longer than one cycle in which the reception and monitoring of the handset unit 1 is completed, that is, 4.04 seconds.

Then, the processing proceeds from step 611 to the next decision step 612.

On the other hand, the handset unit 1 is in the normal standby mode so that steps 501 and 502 in the routine 500 are repeated.

More specifically, it is determined in step 501 whether or not the base unit 2 transmits the vacant channel data EMCH in step 611. If the transmission of the vacant channel data EMCH is not carried out as represented by a NO at step 501, the processing goes to the next decision step 502 whereat it is determined whether or not other processing is requested. If other processing is not requested as represented by a NO at step 502, the processing returns from step 502 to step 501. If other processing is requested as represented by a YES at step 502, then the processing proceeds from step 502 to step 503 whereat the requested processing is performed. Thereafter, the processing returns to step 501.

In normal condition, steps 501, 502 (and step 503) are repeated in the handset unit 1, that is, the handset unit 1 is in the standby mode.

However, if the command signal CMND of the vacant channel data EMCH is transmitted at step 611, the duration of this transmission is longer than the duration of one cycle during which the reception and monitoring of the handset unit 1 is finished. Therefore, this transmission is detected at step 501, and the processing proceeds from step 501 to step 511. In step 511, the channel is fixed to an up channel through which the command signal CMND is received and to a down channel which forms a pair with the above up channel.

From now on, the same processings as those of steps 313 to 318 are carried out in steps 513 to 518, and the same processings as those of steps 412 to 416 are performed in steps 612 to 616.

Accordingly, in step 518, the handset unit 1 is set in the standby mode wherein the handset unit 1 alternately and intermittently receives the two channels indicated by the channel data CHDT. In this standby mode, the handset unit 1 is set in the mode such that the reception is carried out in a desired vacant channel when the handset unit 1 is connected to the base unit 2 in order to make an outgoing call.

Then, the processing returns from step 518 to step 501, and thereafter the handset unit 1 is placed in the standby mode for intermittently receiving the two channels.

Further, in step 616, the base unit 2 is set in the standby mode in which all channels are repeatedly scanned, received and monitored. In this standby mode, when the base unit 2 is connected to the handset unit 1 for receiving an incoming call, the base unit 2 is placed in the mode such that two channels indicated by the channel data CHDT are used. Then, the base unit 2 enters the standby mode from now on.

Accordingly, the handset unit 1 and the base unit 2 are both placed in the standby mode.

Further, if the command signal CMND transmitted from the base unit 2 in step 613 cannot be received by the handset unit 1 as represented by a NO at step 515, the processing proceeds from step 515 to step 541. In step 541, similarly to step 341, it is determined whether or not a predetermined limit time, for example, 25 seconds are passed since step 513 has been executed for the first time. If the predetermined limit time is not passed yet as represented by a NO at step 541, then the processing returns from step 541 to step 514, and step 514 and the following steps are repeated.

However, if the predetermined limit time is passed as represented by a YES at step 541, then the processing proceeds from step 541 to step 542 and in step 542, similarly to step 342, the standby mode is set in the handset unit 1 so that the handset unit 1 repeats such operation that the handset unit 1 scans, receives and monitors all channels and is set in the sleep mode of, for example, about 2.54 seconds each time one scanning operation is ended. In this standby mode, when the handset unit 1 is connected to the base unit 2 for an outgoing call or the like, the handset unit 1 is set in the mode such that the handset unit 1 is connected to the base unit 2 via an arbitrary vacant channel.

Then, the processing returns from step 542 to step 501, and the handset unit 1 enters the standby mode wherein the handset unit 1 receives all channels intermittently.

Further, if the command signal CMND of the data HBEM cannot be received at step 612 of the base unit 2, then the processing proceeds from step 612 to step 631. In step 631, the channel through which the transmission and reception are carried out at steps 611 and 612 is changed to the next vacant channel, and the processing proceeds to step 621.

In step 621, similarly to step 421, it is determined whether or not a predetermined limit time, for example, 41 seconds are passed since step 611 has been executed for the first time. If the predetermined limit time is not passed as represented by a NO at step 621, then the processing returns from step 621 to step 611 and step 611 and the following steps are executed.

On the other hand, if the predetermined limit time is passed as represented by a YES at step 621, then the processing proceeds to step 622. In step 622, the base unit 2 is set in the standby mode in which all channels are scanned, received and monitored. In this standby mode, the base unit 2 is set in the mode such that the reception is carried out via an arbitrary vacant channel when the base unit 2 is connected to the handset unit 1 in order to receive an incoming call or the like. Then, the base unit 2 enters the standby mode set in step 622 from now on.

Further, if the command signal CMND transmitted from the handset unit 1 in step 516 cannot be received as represented by a NO at step 614, then the processing returns to step 611 from step 614 through step 621 for safety, and step 611 and the following steps are executed one more time.

If it is determined in step 602 that the channel data CHDT is not abnormal as a result of checking the channel data CHDT of the RAM 242, then the processing proceeds from step 602 to step 616, wherein the base unit 2 is placed in the standby mode of the original two channels.

An operation in which the handset unit 1 and the base unit 2 are both actuated from the reset condition will be explained below.

This operation is carried out when the cordless telephone is bought by the user and is used for the first time. In that case, the routine 300 is executed by the handset unit 1, and the routine 600 is executed by the base unit 2.

In that case, in the base unit 2, the processing begins with step 601 and proceeds to step 611 through steps 602 and 603. Thereafter, until the base unit 2 receives the data HBEM from the handset unit 1 in step 612 or until the predetermined limit time, 41 seconds, are passed in step 621, the loop of steps 611, 612, 631, 621 and 611, in that order is repeated. At that time, each time one cycle of this loop is completed, the channel is changed into the next vacant channel in step 631.

On the other hand, in the handset unit 1, the processing begins with step 301 and proceeds to step 311 through steps 302 and 303. In the next decision step 312, it is determined whether or not the command signal CMND of the vacant channel data EMCH is received. At that time, although the base unit 2 repeats the loop of steps 611, 612, 631, 621 and 611 to thereby transmit the command signal CMND of the data EMCH, the transmission channel is generally not coincident with the reception channel of step 312.

Consequently, the processing in the handset unit 1 proceeds from step 312 to step 321, and in step 321, the reception channel of the receiving circuit 120 or the handset unit 1 is changed to the next channel. In the next decision step 322, it is determined whether or not the command signal CMND of the data EMCH transmitted in step 611 is received. If the command signal CMND is received as represented by a YES at step 322, the processing proceeds from step 322 to step 313. Thereafter, in the handset unit 1, step 313 and the following steps are executed, whereby the handset unit 1 is placed in the standby mode of step 318 or 342.

In the base unit 2, step 313 and the following steps are executed in the handset unit 1 so that the processing leaves from the loop formed of steps 611, 612, 631, 621 and 611 via step 612 and proceeds to step 613. Therefore, the base unit 2 enters the standby mode of step 616 or 622.

Further, if the command signal CMND of the data EMCH transmitted in step 611 is not received as represented by a NO at step 322, then the processing proceeds from step 322 to step 323. In step 323, it is determined whether or not the checking of reception in step 321 is performed for all channels. If not, the processing returns from step 323 to step 321.

If the checking of reception channel in step 321 is carried out for all vacant channels, the processing proceeds from step 323 to step 331 and steps 331 and 332 are performed from now on.

Accordingly, in the base unit 2, the command signal CMND of the vacant channel data EMCH is repeatedly transmitted in all vacant channels via the loop of steps 611, 612, 631, 621 and back to 611, while the handset unit 1 repeatedly receives the command signal CMND of the vacant channel data EMCH in step 611 in all vacant channels via the loop of steps 312, 321, 322, 323 and 321. Therefore, at any rate, the channel of the handset unit 1 and the channel of the base unit 2 become coincident with each other. If they become coincident with each other, the processing in the handset unit 1 proceeds from step 312 or 322 to step 313, and the processing of the base unit 2 proceeds from step 612 to step 613. Thereafter, the handset unit 1 and the base unit 2 are placed in the standby mode for intermittently receiving two channels in steps 318 and 616.

If the predetermined limit time is passed during the loop cf steps 611, 612, 631, 621 and back to 611 or the loop of steps 312, 321, 322, 323, 331, 332 and 311 is repeatedly carried out, the handset unit 1 or the base unit 2 enters the standby mode of step 342 or 622 thereby to intermittently receive all channels.

Incidentally, the limit time of 41 seconds in step 621 is 10 times the transmission period of 4.04 milliseconds in step 611 so that, when all channels are vacant channels, step 611 is executed in all the channels.

Alternatively, such a variant is also possible that the handset unit 1 or the base unit 2 is provided with a reset switch to thereby force the handset unit 1 or the base unit 2 to execute the routine 300 or 600.

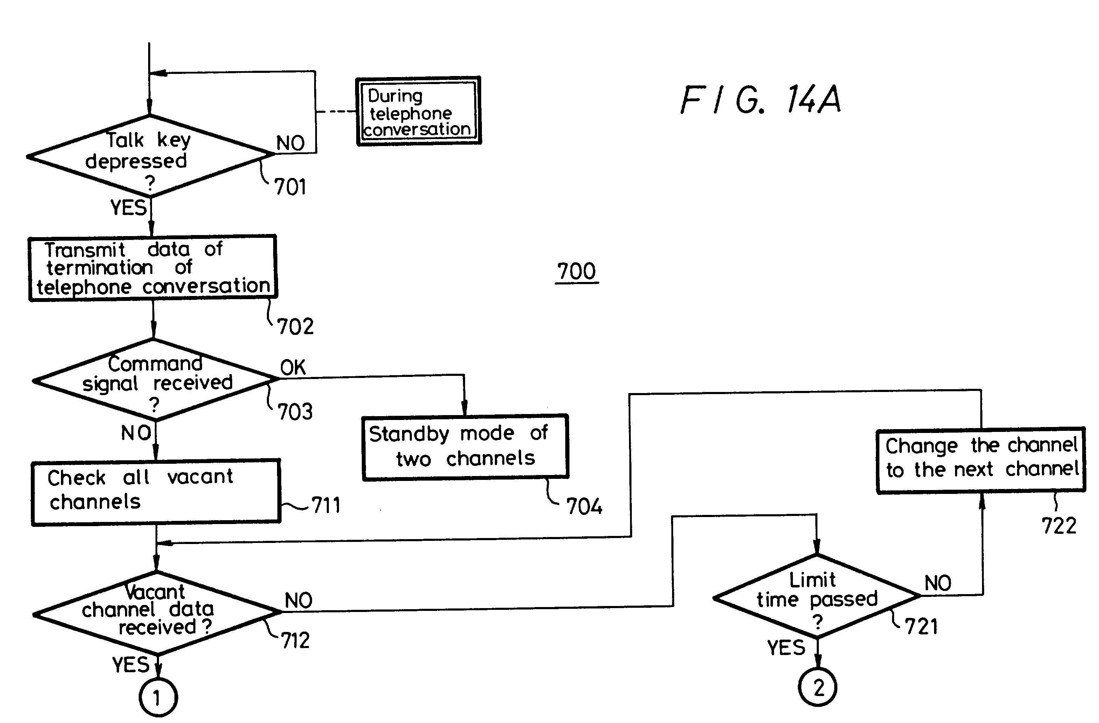

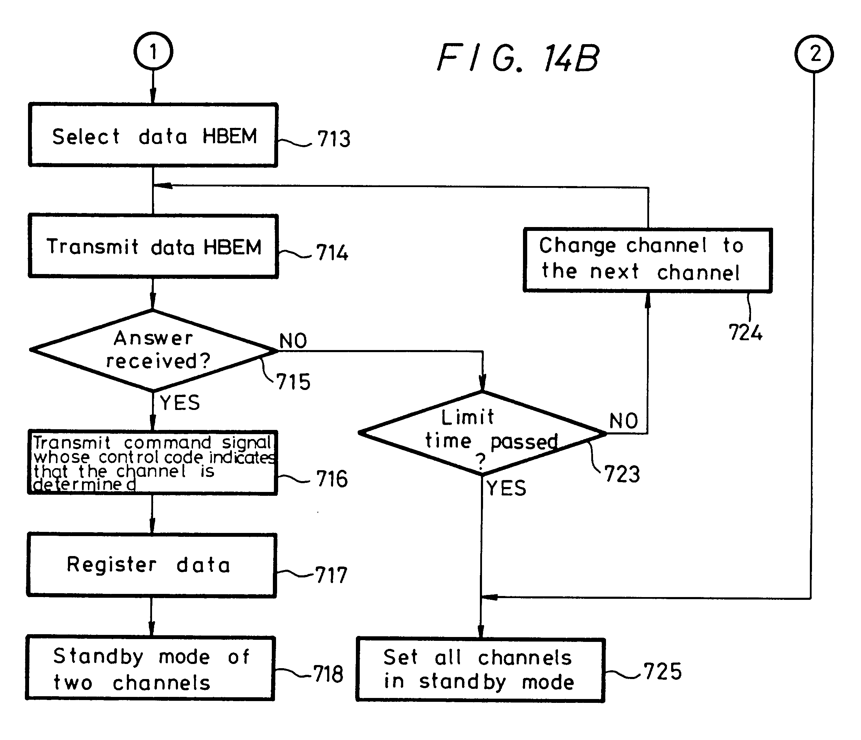

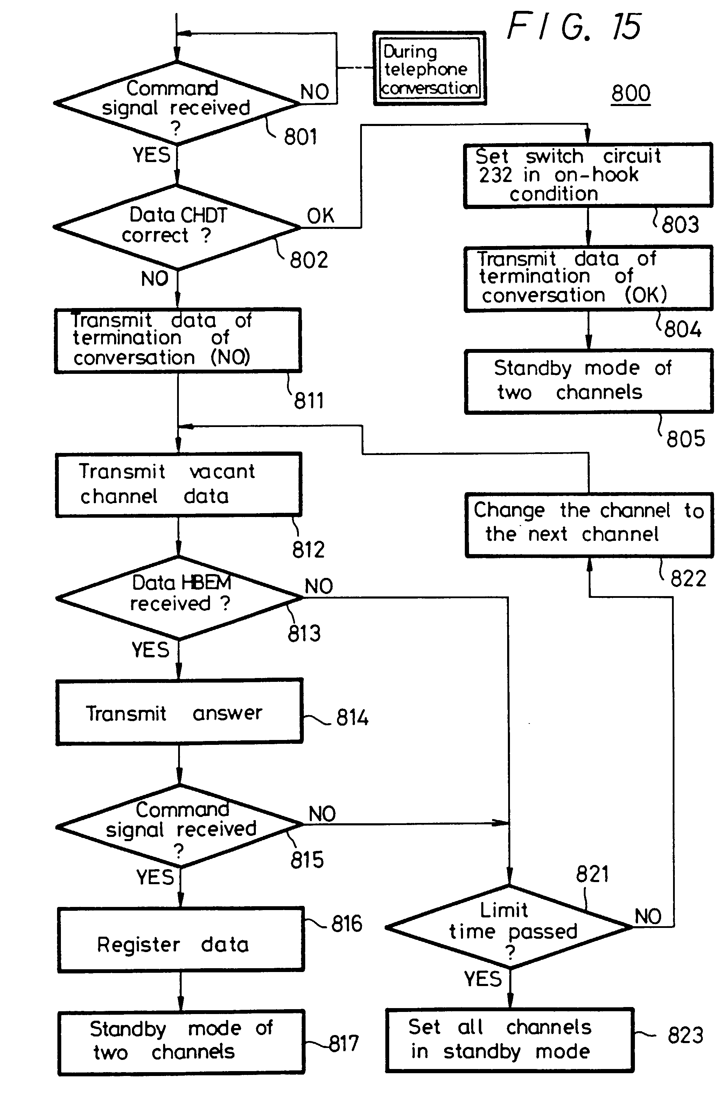

While the operation in which the handset unit 1 and the base unit 2 are actuated from the power reset condition is explained in the above-mentioned embodiment, in order that proper updated channel data may be automatically registered when the telephone communication is ended, a routine 700 of flowchart forming Fig. 14 is prepared in the microcomputer 140 of the handset unit 1 and a routine 800 of flowchart forming Fig. 15 is prepared in the microcomputer 240 of the base unit 2.

If now the handset unit 1 and the base unit 2 are normally operated, in the standby mode, all up channels are repeatedly scanned, received and monitored in the base unit 2. At that time, if there are vacant channels, all vacant channels are registered in the RAM 242 as vacant channel data EMCH. The data EMCH stored in the RAM 242 is always updated each time the channel is scanned, similarly as earlier noted.

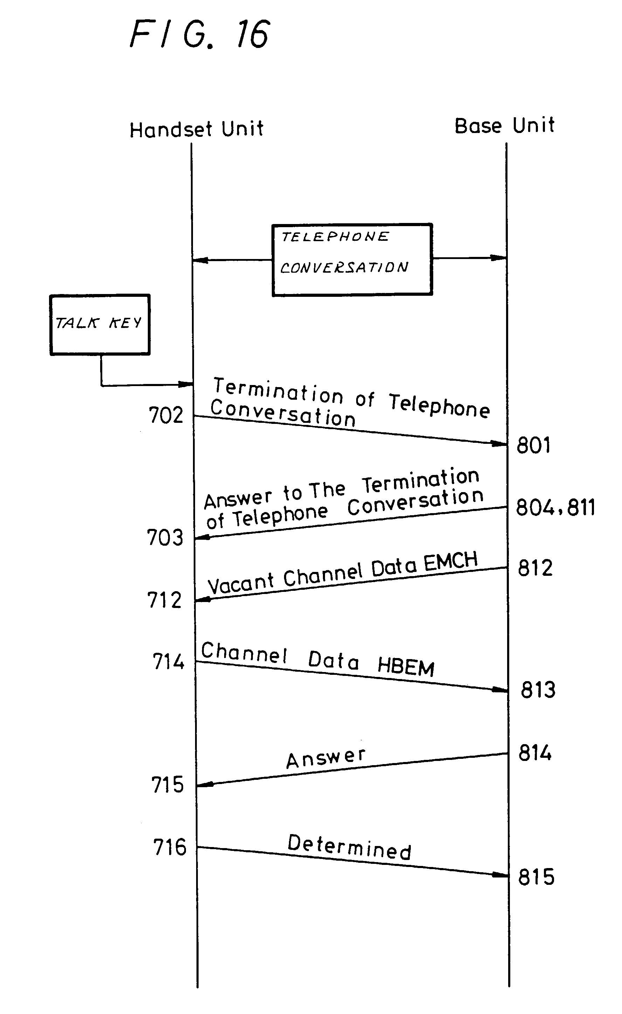

When the telephone communication is ended, the routines 700 and 800 are executed by the microcomputers 140 and 240, thereby the channel data CHDT stored in the RAMs 142 and 242 being updated. Fig. 16 shows a protocol in which the channel data CHDT is updated correctly, and reference numerals on two sides of Fig. 16 correspond with reference numerals of steps in the routines 700 and 800.

More specifically, during the telephone conversation, the handset unit 1 and the base unit 2 are coupled via the channel and the base unit 2 is connected to the telephone network line 3 for effecting the telephone communication.

During this telephone communication, it is determined in step 701 by the microcomputer 140 whether or not the talk key 132 of the handset unit 1 is depressed. If the talk key 132 of the handset unit 1 is not depressed as represented by a NO at step 701, the processing of the microcomputer 140 repeats step 701 so that, during the telephone conversation, the condition of the talk key 132 is always checked.

In the base unit 2, it is determined by the microcomputer 240 in step 801 whether or not a command signal CMND of termination of telephone conversation from the handset unit 1 can be received. If this command signal CMND cannot be received as represented by a NO at step 801, the processing of the microcomputer 240 repeats step 801 so that, during the telephone conversation, the reception of the command signal CMND for terminating the telephone communication is always checked.

If the telephone conversation is finished and the talk key 132 is depressed, such depression of the talk key 132 is detected in step 701, and the processing proceeds from step 701 to step 702. In step 702, a command signal CMND whose control code CTRL indicates the termination of the telephone conversation is transmitted to the base unit 2, and the processing proceeds to step 703.

Then, in the base unit 2, this command signal CMND is detected at step 801 and the processing proceeds from step 801 to step 802. In step 802, it is determined whether or not the channel indicated by the channel data CHDT stored in the RAM 242 is the vacant channel. This checking is performed by checking the detecting signal SQLC in the corresponding channel.

If the checked result is normal, or if the channel indicated by the channel data CHDT is the vacant channel as represented by a YES at step 802, then the processing proceeds from step 802 to step 803. In step 803, the switch circuit 232 is set in the on hook condition, and in the next step 804, a command signal whose control code CTRL indicates the answer to the termination of telephone conversation and that the channel data CHDT is normal is generated and this command signal CMND is transmitted to the handset unit 1.

Then, in step 703, the command signal CMND of step 804 is received and checked. In that case, since the content of the command signal CMND indicates the answer to the termination of the telephone conversation and that the channel data CHDT of the base unit 2 is normal, then the processing proceeds from step 703 to step 704. In step 704, as explained earlier with reference to Fig. 2, the standby mode for alternately and intermittently receiving and monitoring the two channels indicated by the channel data CHDT is set in the handset unit 1. In this standby mode, when the handset unit 1 is connected to the base unit 2 for making an outgoing call or the like, the standby mode is set so that the handset unit 1 is connected to base unit 1 via the arbitrary vacant channel. Then, the handset unit 1 enters the standby mode for intermittently receiving the two channels from now on.

In the base unit 2, the processing proceeds from step 804 to 805, and in step 805, as earlier explained with reference to Fig. 1, the setting of the standby mode is carried out, wherein all channels are repeatedly scanned, received and monitored. In this standby mode, when the base unit 2 is connected to the handset unit 1 for receiving an incoming call or the like, this connection is carried out via the two channels indicated by the channel data CHDT. Then, the base unit 2 enters the standby mode for receiving all channels from now on.

Accordingly, it is to be noted that the handset unit 1 and the base unit 2 are both placed in the standby mode.

However, if the checked result is abnormal, or if the channel indicated by the channel data CHDT is occupied as represented by NO at step 802, the processing proceeds from step 802 to step 811, and in step 811, a command signal CMND whose control code CTRL indicates the answer to the termination of telephone conversation and that the channel data CHDT is abnormal is generated, and this signal CMND is transmitted to the handset unit 1.

Subsequently, the processing proceeds to step 812, and in this step 812, a command signal CMND whose control code CTRL indicates the transmission of the vacant channel data EMCH and the vacant channel data EMCH stored in the RAM 242 is generated and this command signal CMND is transmitted to the handset unit 1. Then, the processing proceeds to step 813.

In step 703, it is determined whether or not the command signal CMND of step 811 is received. In that case, since the content of the command signal CMND indicates the answer to the termination of the telephone conversation and that the channel data CHDT of the base unit 2 is abnormal, the processing proceeds from step 703 to step 711. In step 711, all up channels are sequentially received and monitored to detect vacant channels. All vacant channels detected are registered in the RAM 142 as vacant channel data EMCH, and then the processing proceeds to the next decision step 712.

It is determined in step 712 whether or not the command signal CMND of step 812 is received. If the command signal CMND is received as represented by a YES at step 712, then the processing proceeds to step 713. In step 713, the vacant channel data EMCH obtained in step 811 and the vacant channel data EMCH transmitted through step 812 are compared with each other to thereby produce data HBEM which indicates vacant channels in both of the data EMCH and HBEM.

Also in this case, of the channels indicated by the data HBEM, data of two channels are registered in the RAMs 142 and 242 as the channel data CHDT. When data HBEM of two channels are not obtained, the channel which is vacant in the base unit 2 is employed as the data HBEM. If there is no such channel data, the present channel and the channel next to the present channel are employed as the data HBEM. However, as earlier noted, the specific combination of channels that, when the radio interference occurs in one channel or one channel is disturbed, the other channel tends to be disturbed is excluded from the data HBEM.

In the next step 714, a command signal CMND whose control code CTRL indicates the transmission of the data HBEM and the data HBEM obtained in step 713 is generated, and this command signal CMND is transmitted to the base unit 2. The processing proceeds to step 715.

Then, this command signal CMND is detected at step 813, and the processing proceeds from step 813 to step 814. In step 814, a command signal CMND whose control code CTRL indicates the answer of the reception of the data HBEM is transmitted to the handset unit 1 and the processing proceeds to step 815.

If the control signal CTRL is detected in step 715, then the processing proceeds from step 715 to step 716. In step 716, a command signal CMND whose control code CTRL indicates that the mode is determined is transmitted to the base unit 2, and the processing proceeds to step 717. In step 717, the data HBEM is registered in the RAM 142 as the channel data CHDT.

Subsequently, in step 718, the handset unit 1 is set in the standby mode for alternately and intermittently receiving and monitoring the two channels indicated by the channel data CHDT, similarly to step 704. Further, in this standby mode, when the handset unit 1 is connected to the base unit 2 for making an outgoing call or like, this connection is performed via an arbitrary vacant channel. Then, the handset unit 1 is placed in the standby mode for intermittently receiving the two channels.

Further, in the base unit 2, the command signal CMND transmitted in step 716 is detected at step 815, and the processing proceeds from step 815 to step 816. In step 816, the data HBEM is registered in the RAM 242 as the channel data CHDT.

In the next step 817, the setting of the standby mode for repeatedly scanning, receiving and monitoring all channels is set in the base unit 2, similarly to step 804. In this standby mode, when the base unit 2 is connected to the handset unit 1 for making an incoming call or the like, this connection is carried out via the two channels indicated by the channel data CHDT. Then, the base unit 2 enters the standby mode for receiving all the channels from now on.

Accordingly, it is to be noted that the handset unit 1 and the base unit 2 are both placed in the standby mode.

If it is determined in decision step 712 that the command signal CMND of the vacant channel data EMCH at step 812 cannot be received, then the processing proceeds from step 712 to the next decision step 721. In step 721, it is determined whether or not the predetermined limit time, for example, 41 seconds are passed since the step 712 has been executed for the first time.

If the limit time is not yet passed as represented by a NO at step 721, the processing proceeds from step 721 to step 722 in which the channel is changed to the next channel, and the processing returns from step 722 to step 712. Then, step 712 and the following steps are executed.

However, if the limit time is passed as represented by a YES at step 721, then the processing proceeds from step 721 to step 725 and in this step 725, the setting of the standby mode is performed so that all channels are scanned, received and monitored and the handset unit 1 is placed in the sleep mode of, for example, 2.54 seconds each time one scanning is finished. Further, in this standby mode, when the handset unit 1 is connected to the base unit 2 for making an outgoing call or the like, this connection is performed via an arbitrary vacant channel. Then, the handset unit 1 is placed in the standby mode for intermittently receiving all channels.

Accordingly, also in this case, the handset unit 1 receives and monitors all channels in the standby mode.

In this case, one cycle in which the arbitrary channel is received and monitored and then that channel is received and monitored one more time is 3.74 seconds (= 120 milliseconds × 10 channels + 3.5 seconds).

Further, if the answer command signal CMND in step 814 cannot be received as represented by a NO at step 715, then the processing proceeds from step 715 to the next decision step 723. In decision step 723, it is determined whether or not the predetermined limit time, for example, 41 seconds are passed since the step 712 has been executed for the first time.

If the predetermined limit time is not passed as represented by a NO at step 723, the processing proceeds from step 723 to step 724 in which the present channel is changed to the next vacant channel, and then the processing is returned to step 714. Then, step 714 and the following steps are executed.

On the other hand, if the limit time is passed as represented by a YES at step 723, then the processing proceeds from step 723 to step 725, and in step 725, the handset unit 1 is set in the standby mode for intermittently receiving all channels and the handset unit 1 enters the standby mode from now on.

If in the base unit 2 the command signal CMND of the vacant channel data EMCH in step 714 cannot be received as represented by a NO at step 813, then the processing proceeds from step 813 to the next decision step 821. In step 821, it is determined whether or not the predetermined limit time, for example, 41 seconds are passed since step 812 has been executed for the first time. If the limit time is not passed yet as represented by a NO at step 821, then the processing proceeds from step 821 to the next vacant channel (see step 822) and returned to step 812. Step 812 and the following steps are executed one more time from now on.

On the other hand, if the limit time is passed as represented by a YES at step 821, then the processing proceeds from step 821 to step 823. In step 823, the base unit 2 is set in the standby mode in which all channels are scanned, received and monitored. In this standby mode, when the base unit 2 is connected to the handset unit 1 for receiving an incoming call or the like, the base unit 2 is connected with the handset unit 1 via an arbitrary channel. Then, the base unit 2 enters the standby mode for receiving all the channels.

Further, if the command signal CMND transmitted from the handset unit 1 at step 816 cannot be received at step 815, then the processing proceeds from step 815 to step 821.

As set forth above, according to the present invention, even when the handset unit 1 or the base unit 2 is actuated from the reset condition, the channel data CHDT of two channels can be automatically registered in the RAM 142 of the handset unit 1 and in the RAM 242 of the base unit 2.

Accordingly, even when the user purchases the cordless telephone, when the handset unit 1 is not set in the standby mode unintentionally at the end of the telephone conversation, when the rechargeable battery 151 is inadvertently not charged so that the battery 151 is consumed fully or when a power failure occurs in the base unit 2, informations of latest channel data CHDT can be registered in the RAM 142 and the RAM 242 only by powering the handset unit 1 and the base unit 2.

Further, when the handset unit 1 and the base unit 2 are connected, if the channels used to connect the handset unit 1 and the base unit 2 are only two channels indicated by the channel data CHDT registered in the RAMs 142 and 242, the two channels can be automatically updated on the basis of latest information at that time when the telephone communication is finished.

Therefore, even when only two channels are received and monitored by the handset unit 1 in the standby mode, acknowledged 10 channels can be effectively utilized. Thus, when receiving an incoming call, the base unit 2 can reliably open the communication channel between it and the handset unit 1.

Furthermore, since the duration of the sleep mode of the handset unit 1 in the standby mode need not be reduced, the rechargeable battery 151 can be prevented from being consumed much in the standby mode.

In addition, in a cordless telephone of such type that the base unit 2 is provided with a microphone and a speaker to thereby carry out an extension call between the base unit 2 and the handset unit 1, such extension call can be reliably realized.

## Claims

1. A cordless telephone having means for establishing, upon communication, a communication channel (EMCH) between a master station (2) and a remote station (1) by radio wave link , wherein said master station is connected to a telephone line network (3) to establish a telephone communication between said remote station and a party to be called ;
said remote station is settable into a mode for intermittently receiving signals from said master station on at least one predetermined channel in a standby mode ;
said remote station is placed in a sleep mode when not set in said mode for intermittently receiving signals from said master station ;
said master station informs said remote station of incoming calls via said predetermined channel when said intermittently received signals arrive;
means are provided for exchanging vacant channel information between said master and remote stations when said master and remote stations are operative and during a predetermined time, outside the time occupied by a telephone communication ; and memory means (142) for storing a channel which is a vacant channel for both of said master and remote stations as the said predetermined channel ;
characterised in that it further comprises :
means active at the termination of a telephone communication to cause the master station (2) to send vacant channel data (EMCH) (step 812) to said remote station (1) ;
means in said remote station for comparing said vacant channel data transmitted from said master station with the vacant channel data at the time of termination of said telephone communication, the result of the comparison being used to produce data (HBEM) transmitted to said master station and indicative of vacant channels ; and
means (142) at said remote station (1) for registering the said data, indicative of the channels, as the channel data (CHDT) to be used.

2. The cordless telephone of claim 1, wherein said master station (2) further comprises means for informing said remote station (1) of an incoming call when said incoming call arrives and means for enabling exchange of information of a vacant channel between said master station and said remote station when said master station or said remote station is actuated from its reset condition.

3. The cordless telephone of claim 1 wherein said master station (2) further comprises means for informing said remote station (1) of an incoming call when said incoming call arrives and means for enabling exchange of information of a vacant channel between said master station and said remote station when a telephone communication is ended.

## Patentansprüche

1. Schnurlos-Telefon mit einer Einrichtung, um auf eine Verbindung hin einen Verbindungskanal (EMCH) zwischen einer Basistation und einer gesteuerten Station (1) mittels einer Funkwellenverbindung zu errichten, bei der die Basisstation mit einem Telefonleitungsnetz (3) verbunden ist, um eine Telefonverbindung zwischen der gesteuerten Station und einem anzurufenden Teilnehmer herzustellen,
wobei die gesteuerte Station in einen Modus einstellbar ist, um periodisch Signale von der Basisstation auf zumindest einem vorbestimmten Kanal in einem Bereitschaftsmodus zu empfangen,
wobei die gesteuerte Station in einen Ruhemodus gesetzt ist, wenn sie nicht in den Modus zum periodischen Empfangen von Signalen von der Basisstation eingestellt ist,
wobei die Basisstation über den vorbestimmten Kanal die gesteuerte Station über hereinkommende Anrufe informiert, wenn diese periodisch empfangenen Signale ankommen,
wobei eine Einrichtung vorgesehen ist, um Frei-Kanalinformationen zwischen der Basisstation und der gesteuerten Station auszutauschen, wenn die Basisstation und die gesteuerte Station betrieben werden und während einer vorbestimmten Zeit außerhalb der von einer Telefonverbindung besetzten Zeit, und eine Speichereinrichtung (142), um einen Kanal zu speichern, der für beide, die Basisstation und die gesteuerte Station, als der vorbestimmte Kanal ein freier Kanal ist,
dadurch gekennzeichnet, daß es weiterhin aufweist:
eine Einrichtung, die beim Beenden einer Telefonverbindung betätigt ist, um die Basisstation (2) zu veranlassen Frei-Kanal-Daten (EMCH) (Schritt 812) an die gesteuerte Station (1) zu senden,
eine Einrichtung in der gesteuerten Station, um die Frei-Kanal-Daten, die von der Basisstation gesendet sind, mit den Frei-Kanal-Daten zum Zeitpunkt der Beendigung der Telefonverbindung zu vergleichen, wobei das Vergleichsergebnis verwendet wird, um Daten (HBEM) zu erzeugen, die an die Basisstation gesendet werden, und die die freien Kanäle bezeichnen, und
eine Einrichtung (142) in der gesteuerten Station um die Daten, die die Kanäle als die zu verwendenden Kanal-Daten (CHDT) bezeichnen, zu speichern.

2. Schnurlos-Telefon nach Anspruch 1, bei dem die Basisstation (2) weiterhin eine Einrichtung zum Informieren der gesteuerten Station (1) über einen hereinkommenden Anruf, wenn der hereinkommende Anruf ankommt, und eine Einrichtung zum Ermöglichen eines Informationsaustauschs über einen freien Kanal zwischen der Basisstation und der gesteuerten Station, wenn die Basisstation und die gesteuerte Station aus einem Rücksetzzustand betätigt werden, aufweist.

3. Schnurlos-Telefon nach Anspruch 1, bei dem die Basisstation (2) weiterhin eine Einrichtung zum Informieren der gesteuerten Station (1) über einen hereinkommenden Anruf, wenn der hereinkommende Anruf ankommt, und eine Einrichtung aufweist, um einen Informationsautausch zwischen der Basisstation und der gesteuerten Station zu ermöglichen, wenn eine Telefonverbindung endet.

## Revendications

1. Téléphone sans fil comportant un moyen pour établir, lors d'une communication, un canal de communication (EMCH) entre une station maître (2) et une station à distance (1) au moyen d'une liaison par ondes radio, dans lequel ladite station maître est connectée à un réseau de lignes téléphoniques (3) pour établir une communication téléphonique entre ladite station à distance et une partie à appeler;
ladite station à distance peut être établie dans un mode pour recevoir par intermittence des signaux provenant de ladite station maître sur au moins un canal prédéterminé dans un mode attente;
ladite station à distance est placée dans un mode sommeil lorsqu'elle n'est pas établie dans ledit mode pour recevoir par intermittence des signaux depuis ladite station maître;
ladite station maître informe ladite station à distance d'appels arrivants via ledit canal prédéterminé lorsque lesdits signaux reçus par intermittence arrivent;
un moyen est prévu pour échanger des informations de canal libre entre lesdites stations maître et à distance lorsque lesdites stations maître et à distance fonctionnent et pendant un temps prédéterminé en dehors du temps occupé par une communication téléphonique; et
un moyen de mémoire (142) pour stocker un canal qui est un canal libre pour à la fois lesdites stations maître et à distance en tant que dit canal prédéterminé,
caractérisé en ce qu'il comprend en outre:
un moyen actif lors de la fin d'une communication téléphonique pour faire envoyer par ladite station maître (2) des données de canal libre (EMCH) (étape 812) à ladite station à distance (1);
un moyen dans ladite station à distance pour comparer lesdites données de canal libre transmises depuis ladite station à distance aux données de canal libre à l'instant de la fin de ladite communication téléphonique, le résultat de la comparaison étant utilisé pour produire des données (HBEM) transmises à ladite station maître et indicatives de canaux libres; et
un moyen (142) au niveau de ladite station à distance (1) pour enregistrer lesdites données, indicatives des canaux, en tant que données de canal (CHDT) à utiliser.

2. Téléphone sans fil selon la revendication 1, dans lequel ladite station maître (2) comprend en outre un moyen pour informer ladite station à distance (1) d'un appel arrivant lorsque ledit appel arrivant arrive et un moyen pour permettre un échange d'information d'un canal libre entre ladite station maître et ladite station à distance lorsque ladite station maître ou ladite station à distance est activée à partir de sa condition de remise à l'état initial.

3. Téléphone sans fil selon la revendication 1, dans lequel ladite station maître (2) comprend en outre un moyen pour informer ladite station à distance (1) d'un appel arrivant lorsque ledit appel arrivant arrive et un moyen pour permettre un échange d'information d'un canal libre entre ladite station maître et ladite station à distance lorsqu'une communication téléphonique est terminée.
